# EUROPEAN PATENT APPLICATION

(11) **EP 1 607 859 A1**
(43) Date of publication of application: **21.12.2005**
(21) Application number: 05005654.8
(22) Date of filing: 15.03.2005
(51) Int. Cl.: G06F 9/44

(54) **Method and system for developing large web-based multi-language applications**

(30) Priority: 15.03.2004 US 553255 P
(71) Applicant: Ramco Systems Limited, Chennai, Tamilnadu 600 113 (IN)
(72) Inventor: Krishnan, Natarajan, Velachery, Chennai 600 042 (IN); Ponnaiah, Shanmugavel R., Velachery Chennai 600 042 (IN); Sathiavageeswaran, Suresh, First Street Kottur Chennai 600 085 (IN); Jayaraman, Shyamala, c/o 'Rajeswari', Chennai 600 014 (IN); Rajaraman, Madusudanan, Chennai 600 039 (IN)
(74) Representative: Clarke, Alison Clare

(57) **Abstract**

A system (500) and method to develop large web-based multi-language applications. The Localization and Internationalization approach is described using a Model Based Software Development (110) as its core scheme. The User Interface specifications are captured into a Model-repository (111, 510) using key modeling elements like Sections and Controls. Controls (611,612, 622-626), arc the User Interface elements like Text Box, Text Area, Combo box, Display Only, Grid etc. Sections are groupings of Controls. Location, Language and user's Culture can be ignored when the User Interface is modeled. Next step involves sing a Screen Generator to generate User Interface screens for a given Locale. A Screen Generator Will get the Layout information as input from the user, and generates the Screen for that Layout.

## Description

### FIELD OF THE INVENTION

Embodiments of the present invention relates generally to the technical field of software development and, in one exemplary embodiment, to methods and systems to develop large web-based multi-language applications.

### BACKGROUND

Enterprise application solution providers and enterprise application product vendors face a unique problem not typically found in development of desktop-based applications. These applications are typically required to work in various geographical locations that utilize user interface elements rendered in different languages to reach a broad spectrum of customers. These applications are also typically required to operate on various technology platforms because of the heterogeneous nature of the existing IT architecture.

One common requirement is that, these applications be web-based using a Multi-layer architecture. This web-based operation adds a complex requirement to the development of these applications. In traditional desktop-based applications, localized binaries containing instructions to implement the application are packaged to provide user interface functionality within target geography. In a web-based application, these applications are hosted in one particular geography, and typically all users from other geographies logon and use the application. As such, these web-based applications must have the capability of supporting multiple locales at runtime.

User Interface elements of web-based applications present many challenges like, displaying labels in many languages and displaying messages and errors in a plurality of different languages depending upon the language used by individual users of the applications. Labels are the texts that appear in the user interface of the application beside controls objects that capture input data from a user. The label text potentially occupies less space in one language and more space in another language. Since screen layout is language-dependent, multiple layouts have to be maintained when localizing application screens in different languages. The use of these multiple layouts has provided inefficiencies in the development and operation of these web-based applications.

Due to all the above reasons, enterprise application development, and especially web-based application development, becomes very complex when these applications are enabled and adapted for multiple locales. A typical application typically uses hundreds of busineas functions and tens of thousands of user interface screens in its implementation. A mechanism to improve development of multi-language web-based user interface screens would impact and thus improve development of Web-based multi-locale applications.

### SUMMARY

The below described embodiments of the present invention are directed to methods and systems to develop large web-based multi-language applications. According to one embodiment, there is provided a system for developing large web-based multi-language applications. The systems includes a user interface specification generation module for modeling software specifications, a localization workbench module for modeling locale specific representations of user interface elements of localization specifications, a locale specific screen generation module for generating language-dependent user interface screens out of the localization model, and a model repository database of generated code and user interface screens used to define an application The application uses a Unicode-based run-time on generated code and user's captured cultural preferences to render the application in multiple languages and to capture, store, and display application data in multiple languages.

In another embodiment, there is provided a method for developing large web-based multi-language applications. The method models software specifications, generates code including user interface screens out of the software specification model, models localization specifications, generating language-dependent user interface screens out of the localization model, packages and deploys the generated code and user interface screens as an application, captures user's cultural preferences; and uses a Unicode-based run-time on the generated code and the user's captured cultural preferences to render the application in multiple languages and to capture, store, and display application data in multiple languages.

In yet another embodiment, there is provided a machine-readable medium storing a set on instructions that, when executed by a machine, cause of the machine to perform a method for developing large web-based multi-language applications. The method models software specifications, generates code including user interface screens out of the software specification model, models localization specifications, generating language-dependent user interface screens out of the localization model, packages and deploys the generated code and user interface screens as an application, captures user's cultural preferences; and uses a Unicode-based run-time on the generated code and the user's captured cultural preferences to render the application in multiple languages and to capture, store, and display application data in multiple languages.

The details of one or more embodiments of the invention are set forth in the accompanying drawings and the description below. Other features of the invention will be apparent from the description and drawings, and from the claims.

### BRIEF DESCRIPTON OF THE DRAWINGS

FIG. 1 is a network diagram depicting a system having an Internet-based multi-tier architecture in accordance with one exemplary embodiment of the present invention.

FIG. 2 is a network diagram depicting a system having a private network-based architecture in accordance with one exemplary embodiment of the present invention.

FIG 3 is a block diagram illustrating a general programmable processing system for use in programmable processing system in accordance with various embodiments of the present invention.

FIG. 4a-b represents a two-column layout of a user interface screen object in accordance with an example embodiment of the present invention.

FIG. 5 is a diagram of a multi-language software development processing system server according to an exemplary embodiment of the present invention.

FIG. 6 is a diagram of a model-repository for user interface screen objects according to an exemplary embodiment of the present invention,

FIG. 7 is a flow diagram of a software development of a multi-language application according to an exemplary embodiment of the present invention.

### DETAILED DESCRIPTION

A method and system to develop large web-based multi-language applications are described. In the following description, for purposes of explanation, numerous specific details are set forth in order to provide a thorough understanding of the present invention. It will be evident, however, to one skilled in the art that the present invention may be practiced without these specific details.

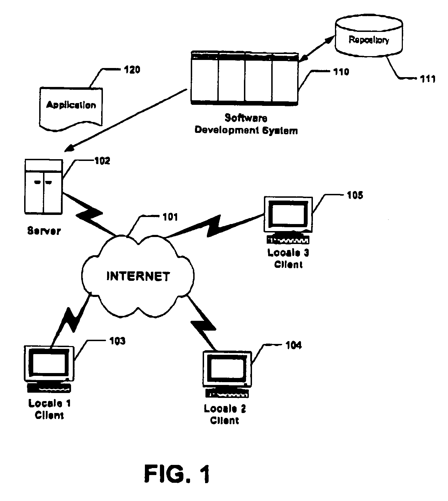

FIG. 1 is a network diagram depicting a system having an Internet-based multi-tier architecture in accordance with one exemplary embodiment of the present invention. Enterprise applications utilizing a multi-tier architecture are widely used within distributed computing environments. Many of these applications utilize the Internet 101 as a communications mechanism between a server 102 hosting the application and users 103-105 using the application. Applications are created using a software development system 110 in which various components of the application are specified.

For applications in which multiple languages are expected to be used by its users, various components of these applications are created in each of these languages and these components are combined into a final application used at runtime. Web-based applications, such as application 120, operate by having these applications hosted on a server 102 that may be accessed by users in different locale. When a user accesses application 120 from a locale 103, the application utilizes other components in the language of locale 103 to render the application in an appropriate language for its users. Similarly, when a user accesses application 120 from a different locale, locale 104, the application utilizes components in a different language used in locale 104 to render the application in its language for its users. This process may be repeated for yet a third locale, locale 105, as needed by all of the users of application 120.

In order for this architecture of application 120 to operate, the application hosted on server 102 is constructed using a model-based software development structure as its core scheme. The user interface specifications for application 120 are captured data into a model-repository 111 using key modeling elements like user interface sections and user interface controls. This process occurs within the software development system 110 as application 120 is being specified.

Controls are the user interface elements like text box items, text area items, combo box items, display only items, grid items and the like. Sections are groupings of controls that are created to construct the user interface of application 120. Controls may be specified in terms of parameters associated with a particular locale. These parameters include location for the controls within the user interface language used for any text components of the user interface, and cultural characteristic of the user interface. These cultural characteristics may include the alphabet used by the local, the direction in which text is rendered, and similar organizational characteristics of the user interface for the locale. Location, language and user's culture may be ignored when the user interface is modeled.

Once locale-independent user interface objects are specified, a screen generator module within the software development system 110 generates user interface screens for a given Locale, The sercen generator module will get the layout information as input from a user, and generates the screen for that particular layout. These screens form the components of application 120 used to render user interface screens for locale 103, locale 104, and locale 105 when the application is hosted on server 102 and accessed by multiple users. At runtime, users provide application 120 with parameter values that define each locale and the application utilizes the appropriate component needed to support each individual locale. By dividing the development of application 120 into components of the model-based software development structure, a single application may be easily developed to support the required locale for each supported user.

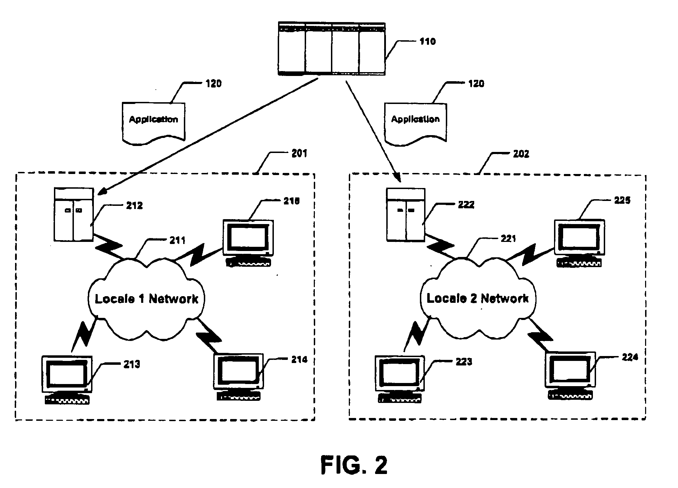

FIG. 2 is a network diagram depicting a system having a private network-based architecture in accordance with one exemplary embodiment of the present invention. Application 120 may operate in a private network-based processing system rather than the Internet as discussed in reference to FIG. 1. In this alternate embodiment, application 120 may be hosted on a locale server 212 within locale 201 as well as being hosted on a locale server 222 in locale 202. Locale server 212 communicates with users 213-215 over locale network 211. Similarly, Locale server 232 communicates with users 223-225 over locale network 221. In this embodiment, application 120 operates as described in reference to FIG. 1 in which user interface components are rendered in terms of the locale parameters used to define each locale.

If a particular locale supports multiple languages, application 120 operates in the same manner as if the application was hosted on the Internet 101. If a particular locale uses only one language, and thus all users utilize the same locale parameters, application 120 may utilize only a subset of the user interface components within application 120 as components used to support another locale are not needed. However, use of the model-based software development structure permits the development and distribution of a single application to support each of the required locales for each supported user without the additional effort of creating different versions of application 120 for each locale. This structure, therefore, simplifies the development process to create only one version of application 120 and does not require maintenance of the multiple locale specific versions of applications as is currently used in prior art systems.

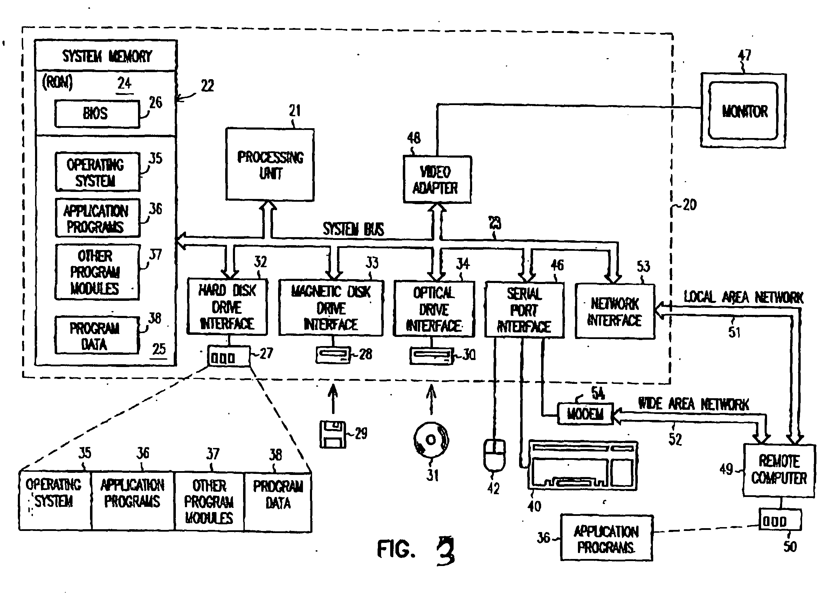

FIG. 3 is an overview diagram of hardware and operating environment in conjunction with which embodiments of the invention may be practiced. The description of FIG. 3 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/0 remote processing devices that are linked through a communications network. In a distributed computing environment, program modules may be located in both local and remote memory storage devices.

In the embodiment shown in FIG. 3, a hardware and operating environment is provided that is applicable to any of the servers and/or remote clients shown in the other Figures.

As shown in FIG. 3, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bemoulli cartridges, random access memories (RAMs), read only memories (RON[s), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 3 include a local area network (LAN) 51 and/or a wide area network (WAN) 52. Such networking environments are commonplace in office networks, enterprise-wide computer networks, intrancts and the intemet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

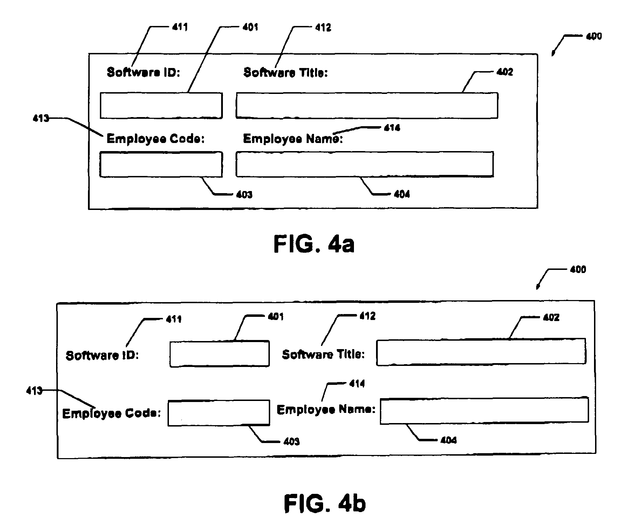

FIG 4a-b represents a two-column layout of a user interface screen object in accordance with an example embodiment of the present invention. Consider a user interface group 400 containing four input text fields 401-404 each having a corresponding text label 411-414. User interface group 400 within FIG 4a is displayed as a two-column layout for the text input fields in which each of the corresponding labels are located on top of the controls. In this example, label 411, that contains the text "Software ID:" is positioned directly above control 401. Similarly, label 412, that contains the text "Software Title:" is positioned directly above control 402, label 413, that contains the text "Employee Code:" is positioned directly above control 403, and label 414, that contains the text "Employee Name:" is positioned directly above control 404. Each of the controls 401-404, and each of the corresponding labels 411-414, possesses a location parameter that defines its location within group 400. This location is specified in an x, y coordinate system relative to a reference position for group 400. When application 120 renders a user interface using group 400, each of these controls 401-404 and its corresponding labels 411-414 are placed with the user interface at a location corresponding to this location within group 400, wherever group 400 is located within the user interface.

FIG 4b represents another representation of a two-column layout of a user interface screen object in accordance with an example embodiment of the present invention. In FIG 4b, user interface group 400 is rendered as a two-column layout with the label and control side by side. Group 400 contains the same for controls 401-404 and corresponding labels 411-414 as rendered in FIG 4a, however the location of the labels relative to the controls has been altered. This modification to the rendering of group 400 may be easily accomplished by merely changing the location parameters for each of the controls 401-404 and their corresponding labels 411-414 to contain the new location positions within the group 400. Application 120 renders a user interface containing group 400 at runtime to create the desired user interface object using these specification for group 400 and its corresponding parameter values. Similar different versions of group 400 may be created using language parameters to specify the language to be used for the label text. The location parameter may be useful in altering a layout for group 400 when a particular label text specified in one language requires more space than the same label text in a second language. Similar variations may be specified using various alphabets for the label text and text direction arrangements (e.g. for language that arrange characters in a right to left arrangement using one character set may be changed to a left to right arrangement using a second character set using this parameter).

For a given locale, a particular layout arrangement may be appropriate. The layout, text layout, alphabet character set and other specification characteristics are specified using the locale parameters. These values are used to render group 400 containing four controls 401-404 and the corresponding four labels 411-414. All of these values are specified when the user interface screens are defined in the software development system 110. These same values are used at runtime by server 102 to generate a user interface screen sent to locale 103 clients as requested.

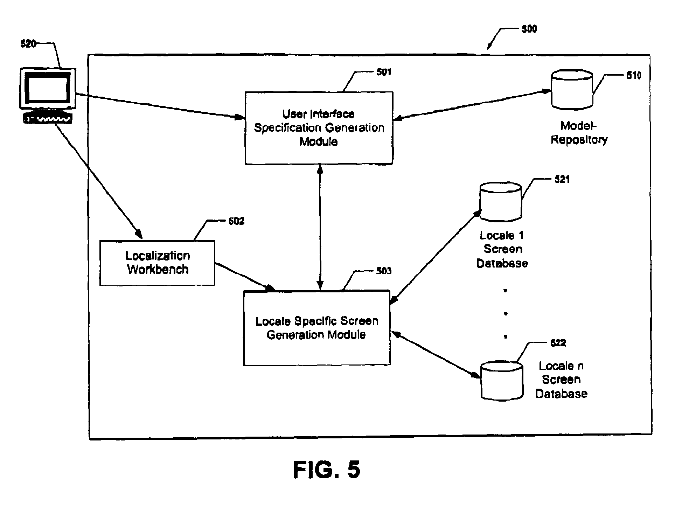

F1G. 5 is a diagram of a multi-language software development processing system server according to an exemplary embodiment of the present invention. In an exemplary embodiment, software development system 500 utilizes a set of modules to capture of information about the user interface elements independent of locale. User 520 interacts with a user interface specification generation module 501 and a localization workbench module 502 to specify a particular user interface group and its various localization representations. User interface specification generation module 501 is used to specify the identity of user interface controls and any corresponding user interface elements that are contained within the particular user interface group. For user interface group 400 of FIG. 4a-b, user interface specification generation module 501 is used to specify that group 400 contains four controls 401-404 and the corresponding text labels 411-414. These location independent specifications for user interface groups are stored within a model repository 510. Localization workbench module 502 may be utilized to capture locale dependent data like Label Text, Error Messages etc. Localization workbench module 502 is used to specify the location for the four controls 401-404 and four corresponding text labels 411-414 for group 400 for each supported locale.

Locale specific screen generation module 503 accepts the locale independent user interface group information from user interface specification generation module 501 and locale specific information from localization workbench module 502 to generate a set of locale specific screens used within application 120. Each of the screens for an individual locale may be stored within a locale specific screen database 521-522,

Application 120 is constructed using all of the locale specific screen databases 521-522 needed to support any desired locale. All the screens are then packaged and deployed. The runtime retrieves the localized screens based on the language of choice of the user. So the Layout could be totally different for a Locale based on its Language. The automatic generation of screens makes it easy to develop and deliver any number of screens (Hundreds of Thousands of Screens) for any number of Locales. This is because screen modeling needs to be done only once and the screen can then duplicated for each language in which it needs to be rendered.

The runtime operation of application 120 utilizes a Unicode based (UTF8) runtime, which will support all languages, and it is platform neutral. The innate capability of the modeling approach also offers technology-platform independence. Hence, the developed solutions will work on a variety of platforms, including, Microsoft Windows platform, Solaris, AIX, HP-UX, OS/400 etc.

For rendering data in locale-specific form, application 120 introduces a step called User Preference setting at deployment time that involves capturing of the User's preferred Locale settings. For example the user can specify his preferred format for date, time, numbering format, language preferences etc. These preferences are used when the data is displayed or captured in the User Interface screens. This technique gives the flexibility to the user to switch to the language of his choice at runtime. This is a very powerful feature when it comes to large Enterprise solutions.

Localization and Internationalization Technique described herein addresses key issues of Web based Enterprise Applications development and delivery. It provides a powerful technique for addressing local preferences when developing, delivering and maintaining a multiple Locale based Web Application.

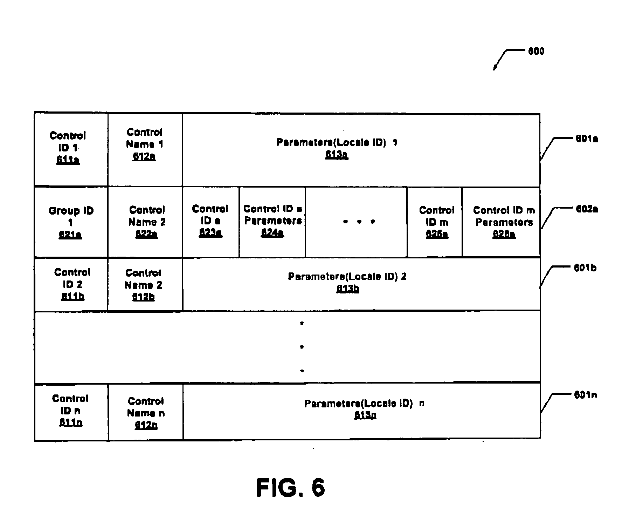

FIG. 6 is a diagram of a model-repository for user interface screen objects according to an exemplary embodiment of the present invention. The model repository 111 is used to hold user interface elements defined by a user of the software development system 110. Within the model repository 111, user interface objects such as controls and text labels are defined. Also within the model repository 111, user interface groups containing user interface objects are also defined. These element definitions are maintained within a database for use by users of the software development system 110 as application 120 is crcatod.

In FIG. 6, three user interface controls are defined 601a-601n. For each user interface control supported by software development system 110 for possible use within application 120, a database entry is maintained. Each of these database entries for user interface controls contains a control ID field 611a, a control name field 612a, and one or more parameter fields 613a. For a first control definition for control 1, 601a, control ID 1 601 defines a unique ID within the database to identify the control definition from all other data base entries. Control name 1 602a provides a user-readable name to provide useful meaning to identity the control to a user of software development system 110 when creating application 120. Parameter field 1 for a particular locale contains the locale parameters, such as location parameter, text language parameters, and the like used to define a control for each particular locale. Similar entries within the model repository 111 are created for a control for each locale supported. These different locales may be identified by a locale ID used to identify the parameter values for a given control.

Model repository 111 also contains an entry 602a for each user interface group defined by a user of software development system 110. These entries define the group using its unique group ID 621a, group name used by a user 622a, and a set of record entries for each user interface control item included within the group 602a. The record entries for these user interface control items include at least the control ID parameter 623a, 625a for each user interface control items in the group. These control ID parameters match the control ID values of the database entries in the model repository 110 used to define the user interface control item. The record entries for these user interface control items include a set of parameter values 624a, 626a containing the locale parameters corresponding to the user interface control items used to define the group. Using these record fields, a group for a particular locale may be defined for its correct use in application 120 supporting a given user within his or her locale. Model repository 110 may contain as many group entries 602a as needed to define the user control groups desired by a user.

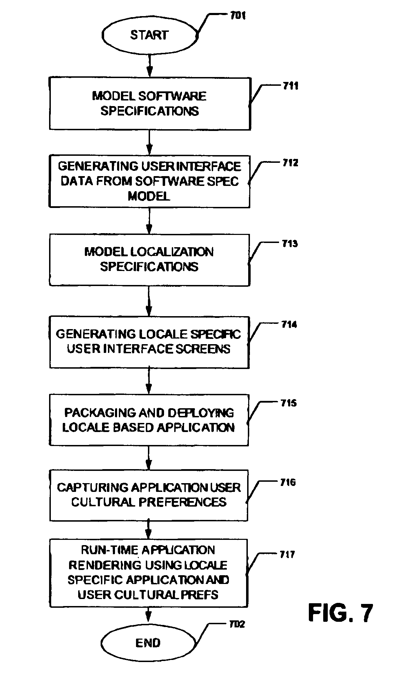

FIG 7 is a flow diagram of a software development of a multi-language application according to an exemplary embodiment of the present invention. The process of creating and using an application 120 containing model-based software development structure begins 701 and a user models software specification for application 120 in operation 711. From this model, user interface data is generated in operation 712 to provide identity and requirements for all user interface items needed to create application 120. The user interface data may contain entries in model repository 110 defining needed user interface control items and needed user interface groups.

Users model localization specifications in operation 713 to define the various locales to be supported by application 120. In operation 713, the user interface control items are defined for each of these supported locales. These definitions contain the locale parameter values needed to define needed user interface control items and needed user interface groups in each of the supported locale. All of these data entries are used within operation 714 to generate locale specific user interface screens needed to define application 120 for all supported locale.

Once these locale specific user interface screens are created, application 120 is created in operation 715 with packaging and deploying of this locale specific data to the server 102 hosting application 120. The application 120 is ready to support users in a runtime operation. Users specify locale specific preferences in operation 716 that are used to define a specific locale. These preferences are used to define the locale parameters referenced when the user accesses application 120. At runtime, application 120 renders its user interface components containing screens, controls and items needed for a user to interact with application 120 in operation 717. In operation 717, the user transmits requests for service by application 120 that contains data to both identify operations to be performed and specify locale in which the user interface is defined. Application 120 performs any required operation to perform is functionality and then renders its user interface representation using the locale specific screens and other items as refined above. The runtime actions of operation 717 are repeated as necessary to provide users functionality of application 120.

Thus, a method and system developing large web-based multi-language applications have been described. Although the present invention has been described with reference to specific exemplary embodiments, it will be evident that various modifications and changes may be made to these embodiments without departing from the broader spirit and scope of the invention. Accordingly, the specification and drawings are to be regarded in an illustrative rather than a restrictive sense.

## Claims

1. A system (500) for developing large web-based multi-language applications, the system comprises:
a user interface specification generation module (501) for modeling software specifications;
a localization workbench module (502) for modeling locale specific representations of user interface elements of localization specifications;
a locale specific screen generation module (503) for generating language-dependent user interface screens out of the localization model; and
a model repository database (510) of generated code and user interface screens used to define an application;
wherein the application uses language-dependent user interface screens (521, 522) out of the localization model and user's captured cultural preferences to render the application in multiple languages and to capture, store, and display application data in multiple languages.

2. The system according to claim 1, wherein the model repository database (510) comprises a set of database records defining user interface control items (520) and user interface groups, wherein the user interface controls comprise user interface screen items, text box items, text area items, combo box items, display only items, and grid items, wherein user interface groups comprise a plurality of user interface controls combined to form a user interface screen used by the application.

3. The system according to claim 2, wherein the user interface controls comprise a plurality of locale parameters used to define user interface interactions for a given locale for a user interface group wherein, the plurality of locale parameters comprises a location parameter, text language parameter, and a plurality of cultural parameters.

4. A method (701) for developing large web-based multi-language applications, the method (701) comprising:
modeling software specifications (711);
generating code (712) including User Interface screens out of the software specification model;
modeling localization (713) specifications;
generating language-dependent user interface screens (714) out of the localization model;
packaging and deploying (715) the generated code and user interface screens as an application;
capturing (716) user's cultural preferences; and
using (717) a Unicode-based run-time on the generated code and the user's captured cultural preferences to render the application in multiple languages and to capture, store, and display application data in multiple languages.

5. The method according to claim 4, wherein the software specification model comprises a set of database records defining user interface control items and user interface groups, wherein the user interface controls comprise user interface screen items, text box items, text area items, combo box items, display only items, and grid items.

6. The method according to claim 5, wherein user interface groups comprise a plurality of user interface controls combined to form a user interface screen used by the application, wherein the user interface controls comprise a plurality of locale parameters used to define user interface interactions for a given locale for a user interface group, wherein the plurality of locale parameters comprises a location parameter, text language parameter, and a plurality of cultural parameters,

7. A machine-readable medium storing a set on instructions that, when executed by a machine, cause of the machine to perform a method (701) for developing large web-based multi-language applications, the method (701) comprising:
modeling software specifications (711);
generating code (712) including User Interface screens out of the software specification model;
modeling localization (713) specifications;
generating language-dependent user interface screens (714) out of the localization model;
packaging and deploying (715) the generated code and user interface screens as an application;
capturing (716) user's cultural preferences; and
using (717) a Unicode-based run-time on the generated code and the user's captured cultural preferences to render the application in multiple languages and to capture, store, and display application data in multiple languages.

8. The machine-readable medium according to claim 7, wherein the software specification model comprises a set of database records defining user interface control items and user interface groups, wherein the user interface controls comprise user interface screen items, text box items, text area items, combo box items, display only items, and grid items.

9. The machine-readable medium according to claim 8, wherein user interface groups comprise a plurality of user interface controls combined to form a user interface screen used by the application.

10. The machine-readable medium according to claim 8, wherein the user interface controls comprise a plurality of locale parameters used to define user interface interactions for a given locale for a user interface group, wherein the plurality of locale parameters comprises a location parameter, text language parameter, and a plurality of cultural parameters.
